# EUROPÄISCHE PATENTANMELDUNG

(11) **EP 1 138 463 A2**
(43) Veröffentlichungstag der Anmeldung: **04.10.2001**
(21) Anmeldenummer: 01106748.5
(22) Anmeldetag: 17.03.2001
(51) Int. Cl.: B29C 47/92

(54) **Verfahren zur Regelung des Durchmessers von Folienschläuchen während ihrer Herstellung in Folienblasanlagen**

(30) Priorität: 29.03.2000 DE 10015731
(71) Anmelder: HOSOKAWA ALPINE Aktiengesellschaft & Co. OHG, 86199 Augsburg (DE)
(72) Erfinder: Mahler, Franz, Dipl.Ing (FH), 86169 Augsburg (DE); Baier, Christian, Dipl.-Ing., 86356 Steppach (DE); Sager, Stefan, Dipl.-Ing. (FH), 86199 Augsburg (DE); Bayer, Bernd, Dipl.-Ing. (FH), 86450 Altenmünster (DE); Golling, Jakob, Dipl.-Ing. (FH), 86672 Tierhaupten (DE); Greisel, Josef, Dipl.-Ing. (FH), 86179 Augsburg (DE)

(57) **Zusammenfassung**

Die Erfindung betrifft ein Verfahren zur Regelung des Durchmessers von Folienschläuchen während ihrer Herstellung in Folienblasanlagen, wobei die Regelung des Durchmessers der herzustellenden Folienschläuche mittels Abstandsmessung durch Ultraschall-Sensoren (17) erfolgt, und der Betrieb der Anlage dadurch zuverlässiger und kostengünstiger gemacht wird, indem auf die Verwendung von mechanischen Stellmitteln und Antrieben für eine Nachjustierung der Ultraschall-Sensoren (17) verzichtet wird und die Anpassung des Arbeitsfensters der Ultraschallsensoren (17) nicht mechanisch, sondern elektrisch erfolgt, wobei ein weiterer Ultraschallsensor (18) vorgesehen ist, auf Grund dessen Ausgangsgröße die Arbeitsfenster der anderen Ultraschallsensoren (17) angepasst werden. Dies vereinfacht den Betrieb der Folienblasanlagen, da insbesondere kein manuelles Nachstellen der Ultraschall-Sensoren erforderlich ist.

## Beschreibung

### Grundlage der Erfindung:

Die Erfindung betrifft ein Verfahren zur Regelung des Durchmessers von Folienschläuchen während ihrer Herstellung in Folienblasanlagen. Derartige Anlagen bestehen aus einem Extruder zum Schmelzen, Mischen, Entgasen und Homogenisieren von Kunststoffgranulat, der an einen Folienblaskopf angeschlossen ist. Der Folienblaskopf dient zur Verteilung der geschmolzenen Kunststoffmasse für einen gleichmäßigen Austritt aus einer Ringdüse am Ausgang des Folienblaskopfes. Bei Koextrusionsanlagen sind mehrere Extruder an einen Koextrusionsblaskopf angeschlossen, wodurch mehrschichtige Folien, z.B. in drei, fünf oder sieben Schichten aus Polyethylen (PE) hoher (HDPE) und niedriger (LDPE) Dichte, Polypropylen (PP), sowie aus weiteren Polymeren oder Polymergemischen in den unterschiedlichsten Kombinationen hergestellt werden können.

Nach dem Austritt der Kunststoffschmelze aus der Ringdüse wird der Folienschlauch in seiner Längsrichtung abgezogen und durch erhöhten Innendruck, aufgrund in das Innere des Folienschlauches zugeführter Luft, auf den gewünschten Durchmesser aufgeblasen. Ein zwischen Folienblaskopf und der folgenden Flachlegevorrichtung angeordneter Kalibrierkorb stützt und führt den aufgeblasenen Folienschlauch. Der Kalibrierkorb ist in seiner inneren Öffnungsweite verstellbar, so daß er auf die unterschiedlichsten Foliendurchmesser eingestellt werden kann. Insbesondere bei Folienblasanlagen mit einer Innenkühlung ist der Einsatz von Kalibrierkörben notwendig.

Nach Abkühlen des aufgeblasenen Folienschlauches durch Luftkühlung im Inneren und an der Außenseite des Folienschlauches, wird dieser nach der Flachlegung einer Abzugsvorrichtung zugeführt und anschließend auf einen Folienwickel aufgespult.

Ein wesentliches charakteristisches Merkmal eines so hergestellten Folienwickels ist die Breite der flachgelegten Folie, d.h. die axiale Länge des Folienwickles. Diese Länge wird auch als Liegebreite bezeichnet. Die Liegebreite ergibt sich aus dem Umfang bzw. dem Durchmesser des Folienschlauches

Die Einstellung und Steuerung des Umfangs bzw. des Durchmessers des Folienschlauches während seiner Herstellung, erfolgt durch das Zuführen und Absaugen von Kühlluft im Inneren des Folienschlauches. Hierfür sind zentral im Folienblaskopf angeordnete Luftführungskanäle vorgesehen. Der Luftzuführungskanal ist mit einem geeigneten Gebläse zur Erzeugung des Kühlluftstroms verbunden. Der Abluftkanal ist mit einem Sauggebläse verbunden, das die erhitzte Luft wieder absaugt.

Die Steuerung der zu- und abgeführten Luftmenge erfolgt entweder durch drehzahlgeregelte Motoren an den Gebläsen, oder durch Stellorgane in den Luftleitungen, z.B. durch in die Leitungen eingebaute Klappen, die elektrisch verstellt werden können.

Die Folienblasanlage wird zunächst manuell angefahren und die gewünschte Liegebreite eingestellt. Wenn der optimale Betriebspunkt erreicht ist, wird auf eine automatische Steuerung umgeschaltet. Um die Liegebreite der Folie während des gesamten Herstellungsprozesses konstant halten zu können, werden entsprechende automatische Regelungen eingesetzt.

Weil sich die Blasengeometrie im stabilen, quasistationären Betrieb nicht mehr verändert, kann als Sollwert statt der Liegebreite der Durchmesser des Folienschlauches herangezogen werden. Dies ist insbesondere deshalb vorteilhaft, weil evtl. Änderungen im Durchmesser des Folienschlauches bereits frühzeitig, also kurz nach der Extrusion aus der Ringdüse, im Bereich oberhalb oder sogar unterhalb der Frostlinie gemessen werden können und somit ein schneller Korrektur-Regeleingriff möglich ist. Bei Beginn der Regelung wird der aktuelle Ist-Durchmesser ermittelt und als Sollwert übernommen. Dieser Soll-Durchmesser dient im weiteren Herstellungsprozess als Zielgröße für die Regelung. Je nach Abweichung von dieser Zielgröße erfolgt ein Regeleingriff entweder in die zu- oder abgeführte Innenkühlluftmenge.

Für die Messung des Durchmessers des Folienschlauches werden bevorzugt berührungslos arbeitende Sensoren, insbesondere Ultraschallsensoren eingesetzt. Diese Sensoren sind Entfernungsmesser, die z.B. am Kalibrierkorb der Folienblasanlage befestigt sind und den Abstand von Sensor und der Oberfläche des aufgeblasenen Folienschlauches messen. Die eigentliche Regelung beschränkt sich dabei lediglich auf das Konstanthalten dieses Abstandes von Sensor und Folienschlauch.

Bei einer Umstellung des Herstellungsprozesses auf eine andere Liegebreite, d.h. auf einen anderen Folienschlauchdurchmesser wird der Kalibirerkorb in seinem Durchmesser verstellt. Die Sensoren sind üblicherweise über eine Halterung mit den schwenkbaren Armen des Kalibrierkorbs verbunden und werden mit diesen Armen mitgeführt, so daß bei der Durchmesserverstellung des Kalibrierkorbes die Sensoren immer im annähernd gleichen Abstand zum Folienschlauch stehen.

Bei einer Messung wird ein kurzer Ultraschall-Impuls von einem Sender in Richtung des Folienschlauches abgestrahlt, von der Oberfläche des Folienschlauches reflektiert und von einem Ultraschall-Empfänger wieder aufgefangen. Dabei wird die Zeit vom Aussenden des Impulses bis zum Eintreffen des Echos bestimmt. Aus dieser Laufzeit des Schallimpulses läßt sich der Abstand von Ultraschallsensor und der Oberfläche des Folienschlauches bestimmen (Laufzeitmesssung).

Ultraschallsensoren können entweder als nur ein Ultraschall-Wandler (Kombiwandler) ausgebildet sein, der sowohl einen Schallimpuls aussendet als auch die Echosignale empfängt, oder aus zwei Ultraschall-Wandlern bestehen, wobei ein Wandler als Sender und der andere Wandler als Empfänger arbeitet.

Anstelle eines einzigen Ultraschallsensors können auch mehrere Ultraschallsensoren eingesetzt werden, die auf einem Umfang in Abstand zum aufgeblasenen Folienschlauch angeordnet sind. Der Mittelwert der Messungen wird dann zur Regelung verwendet. Dadurch können auch Folienschläuche geregelt werden deren Blase sich exzentrisch zur Mittenachse der Extrusionsrichtung befindet.

### Stand der Technik:

Eine Vorrichtung zum Messen des Durchmessers bzw. des Umfangs eines im Blasverfahren hergestellten Folienschlauches ist aus der DE 42 38 868 A1 bekannt. Die dortige Meßeinrichtung weist drei Meßfühler (Ultraschall-Sensoren) auf, die in einer senkrecht zur Extrusionsachse stehenden Meßebene in gleichem Abstand zur Extrusionsachse um den gleichen Umfangswinkel zueinander verstetzt angeordnet sind. Die Ultraschall-Sensoren erfassen den Abstand zur Mantelfläche des Folienschlauches. Ferner ist eine die Abstandswerte der Meßfühler auswertende Recheneinheit vorgesehen, die aus den ermittelten Abstandswerten durch Mittelwertbildung den Durchmesser bzw. Umfang des Folienschlauchs berechnet. Eine Steuereinrichtung steuert die dem Folienschlauch zugeführte Blasluftmenge derart, daß der Durchmesser des Folienschlauches konstant ist.

Eine weitere Art und Anordnung von berührungslos den Folienschlauch abtastenden Sensoren ist aus der DE 198 11 595 C1 bekannt. Ein besonderes Problem bei den dortigen Sensoren ergibt sich daraus, daß sie dicht in einem definierten Abstand an die Wandung des Folienschlauchs angestellt werden, um möglichst gute Meßergebnisse zu erzielen.

Ergeben sich in dem Folienschlauch plötzliche Schwankungen im Durchmesser, die in Form eines sog. Pumpens oder Ausbauchens durch Bildung von Beulen insbesondere dann auftreten können, wenn die Folienblasanlage im oberen Bereich ihrer Leistungsgrenze gefahren wird und/oder sich das Mischungsverhältnis des angesetzten Kunststoffgranulats ändert oder ein Chargenwechsel erfolgt, besteht die Gefahr, daß die Schlauchfolienblase den Sensor berührt, so daß die Schlauchfolie eingerissen und möglicherweise auch der Sensor zerstört wird. Wird die Schlauchfolienblase eingerissen, wird es in der Regel erforderlich, die Anlage neu anzufahren, was wegen des Einführens des extrudierten Kunststoffschlauchs in die Abzugseinrichtung und des erneuten Einstellens des Aufblasverhältnisses mit einem erheblichen Aufwand und einem Produktionsverlust verbunden ist.

Um bei plötzlichen Durchmesserschwankungen zu verhindern, daß die Schlauchfolienblase mit dem berührungslos abtastenden ersten Sensor in Berührung kommt, wird dort vorgeschlagen einen weiteren, zweiten Sensor unterhalb des oder der bisherigen ersten Sensoren im Bereich der Frostlinie des Folienschlauches vorzusehen, der plötzliche Durchmesservergrößerungen erfasst und einem Rechner zuführt, der einen Steuerimpuls an den oder die ersten Sensoren liefert, wodurch diese so schnell zurückgefahren werden, daß sie sich außerhalb der Durchmesservergößerung befinden.

### Nachteile im Stand der Technik. Aufgabe und Lösung der Erfindung:

Für das schnelle Zurückfahren der Sensoren ist im genannten Stand der Technik jedoch ein Antrieb erforderlich. Dieser zusätzliche Antrieb ist mit zusätzlichen Kosten verbunden, was die gesamte Anlage verteuert. Des weiteren ist die mechanisch bewegliche Befestigung von Ultraschall-Sensoren ungünstig, da die relativ wenig starre Verbindung, selbst im normalen Betriebszustand zu Meßungenauigkeiten führen kann. Insbesondere ist es weiterhin nötig, bei Umstellung auf ein anderes Folienprodukt, d.h. auf eine herzustellende Folie mit einer anderen gewünschten Folienbreite (Liegebreite) den oder die Ultraschall-Sensor/en nachzuführen und auf einen geänderten Soll-Durchmesser des Folienschlauches zu justieren.

Um genaue Ergebnisse zu erhalten, werden die Ultraschall-Sensoren üblicherweise nur auf einem relativ eng begrenztem Abstandsbereich von dem zu messenden Objekt (Mantelfläche des Folienschlauchs), im sog. Fensterbetrieb betrieben. Deshalb ist bei einer Umstellung auf einen wesentlich anderen Soll-Durchmesser des Folienschlauches ein Nachführen des Ultraschall-Sensors erforderlich.

Die Erfindung beruht auf der Erkenntnis, daß die üblicherweise eingesetzten Abstandssensoren einen Arbeitsbereich, d.h. ein Arbeitsfenster aufweisen, daß den Folienschlauch-Durchmesser nur in sehr engen Grenzen zwischen einem minimalen und maximalen messbaren Schlauchdurchmesser erfasst. So werden bei elektrischen Sensoren, wie z.B. bei Ultraschallsensoren analoge Ausgangssignale mit einer Spannung von 0 bis 10 V ausgegeben, die eine Durchmesseränderung von ca. 200 mm erfassen. Die in einer der Luftleitungen der zu- oder abgeführten Innenkühlluft befindlichen Klappen sind elektrisch verstellbar und werden ebenfalls mit einer Spannung zwischen 0 und 10 V angesteuert.

Die enge Eingrenzung des Messbereiches ist erforderlich, um eine genügend präzise Signalaufbereitung für die Folgegeräte, wie z.B. den steuerbaren Klappen in den Kühlluftleitungen oder die drehzahlgesteuerten Antriebsmotoren der Gebläse, zu erzielen. Soll jedoch ein Folienschlauch mit einem wesentlich geänderten Durchmesser hergestellt werden, so müssen die Sensoren auf den neuen Soll-Durchmesser nachgeführt werden.

Bisher wurden die Sensoren entweder manuell oder mechanisch nachgeführt, bzw. eingestellt oder wurden z.B. an dem beweglichen Kalibrierkorb befestigt, so daß sie mit der Durchmesseränderung des Kalibrierkorbes automatisch nachgeführt wurden.

Da solche nachführbaren Sensoren nicht ortsfest, also nicht sehr starr montiert waren, bestand die Gefahr, daß die Sensoren ihre exakte Ausrichtung verloren und in der Folge Regelungsfehlern aufgetreten sind, da der von den Sensoren gemessene Durchmesser nicht dem tatsächlichen Zustand der Folienblase entsprach.

Aufgabe der vorliegenden Erfindung ist es, bei Blasfolienanlagen mit Regelung des Durchmessers der herzustellenden Folienschläuche mittels Abstandsmessung durch Ultraschall-Sensoren, den Betrieb der Anlage zuverlässiger und kostengünstiger zu machen; insbesondere soll auf die Verwendung von mechanischen Steilmitteln und Antrieben für eine Nachjustierung der Ultraschall-Sensoren verzichtet werden. Dies vereinfacht auch den Betrieb derartiger Folienblasanlagen, da insbesondere auch kein manuelles Nachstellen der Ultraschall-Sensoren erforderlich ist.

Diese Aufgabe wird erfindungsgemäß durch die Merkmale des Patentanspruchs 1 gelöst.

### Beschreibung der Erfindung:

Bei dem erfindungsgemäßen Verfahren werden die Ultraschall-Sensoren zur Messung des Foliendurchmessers an dem Rahmen des Kalibrierkorbes, oder sogar am Rahmen der Folienblasanlage montiert und sind somit starr befestigt. Aufgrund dieser starren Befestigung ist die Gefahr eines ungewollten Verstellens der Ultraschall-Sensoren weitgehend unterbunden.

Erfindungsgemäß wird ein zusätzlicher Ultraschall-Sensor vorgesehen, der den aktuellen Öffnungszustand des die Schlauchfolie umfassenden Kalibrierkorbes oder direkt den Durchmesser der Blase ermittelt. Dazu wird der zusätzliche Sensor, ebenfalls ortsfest und starr am Rahmen des Kalibrierkorbes oder des Rahmens der Folienblasanlage montiert und auf einen fest mit dem Verstellmechanismus des Kalibierkorbs verbundenen Reflektor oder direkt auf die Folie gerichtet.

Beim Öffnen oder Schließen des Kalibrierkorbes wird vom zusätzlichen Sensor eine Abstandsänderung registriert. Aus diese Abstandsänderung und den geometrischen Randbedingungen (Ortslage des zusätzlichen Sensors) läßt sich der Bereich in dem der gewünschte Soll-Durchmesser für den Folienschlauch liegt, ermitteln und diese Information einer Steuerung zuführen.

Die Steuerung verstellt dann aufgrund dieser Eingangsgröße das Arbeitsfenster des oder der Ultraschall-Sensoren für die eigentliche Abstandsmessung zwischen Sensoren und dem Folienschlauchs.

Bei dem erfindungsgemäßen Verfahren erzeugt der zusätzliche Ultraschallsensor ein abstandsproportionales Analogsignal (z.B. in Form einer elektrischen Spannung von 0-10V), das als Eingangsgröße in die Steuereinheit eingegeben wird. Diese Eingangsgröße liefert eine Information über die Änderung der Öffnungsweite des Kalibrierkorbes oder des tatsächlichen Durchmessers des Folienschlauchs. Somit definiert diese Eingangsgröße die Änderung (z.B. Δ100mm) des Solldurchmessers des Folienschlauchs.

In üblichen Folienblasanlagen mit Ultraschallsensoren kann auch ein zusätzlicher Ultraschallsensor zur Temperaturkompensation vorgesehen sein.

Erfindungsgemäß kann diese Funktion auch von dem erfindungsgemäßen zusätzlichen Ultraschallsensor übernommen werden, dadurch entfällt ein eigener Sensor für die Temperaturkompensation.

Aufgrund dieser Eingangsgröße wird durch Steuerungssignale das Arbeitsfenster der ersten Ultraschallsensoren derart verstellt, daß der mittlere Bereich des Arbeitsfensters auf dem Radius des neuen Solldurchmesser des Folienschlauches zu liegen kommt. Dabei wird der obere Grenzwert (z.B. 10V) und der untere Grenzwert (z.B. 0V) des einstellbaren Arbeitsfensters neu festgelegt.

Die Anpassung des Arbeitsfensters der Ultraschallsensoren erfolgt somit erfindungsgemäß nicht mechanisch, sondern auf elektrischem Weg, wobei vorzugsweise ein weiterer Ultraschallsensor vorgesehen ist, auf Grund dessen Ausgangsgröße die Arbeitsfenster der anderen Ultraschallsensoren angepasst werden.

Die Werte (z.B.Spannungswerte 0-10 V) aus den ersten Ultraschallsensoren können dann wieder als Ausgangsgrößen zur Steuerung der zu- und abgeführten Luftmenge im aufgeblasenen Folienschlauch dienen.

Die Steuerung der zu- und abgeführten Luftmenge im aufgeblasenen Folienschlauch erfolgt über elektrisch verstellbare Klappen in den Luftleitungen oder direkt durch die Drehzahlregelung der Motoren der Luftgebläse.

In einer weiteren Ausgestaltung der Erfindung kann auf den zusätzlichen Ultraschall-Sensor verzichtet werden, in dem ein direktes Signal der Stellung des Kalibrierkorbes aus einer vorhandenen Anlagensteuerung übernommen wird. Es ist auch möglich den Sollwert manuell über eine Eingabevorrichtung, wie z.B. der Tastatur einer PC-Anlagensteuerung vorzugeben. Diese Eingabe kann auch direkt an die manuelle Vorgabe des Soll-Durchmesserwertes für die herzustellende Schlauchfolie geknüpft sein.

### Erläuterung der Zeichnungen:

In der Fig. 1 ist eine schematische Darstellung der Folienblasanlage gezeigt.
Fig. 2 zeigt eine Detailansicht des Aufblasbereiches in dem die Regelung stattfindet.
Fig. 3 zeigt die Ausführungsform mit Reflektor am Kalibrierkorb-Arm
Fig. 4 zeigt einen Ultraschall-Sensor mit eingestelltem Arbeitsfenster.
Fig.5 zeigt eine konzentrische Anordnung von drei Ultraschall-Sensoren zusammen mir einem Referenz-Sensor.

### Detailierte Erklärung der Ausführungsformen, Beispiele:

Über eine Dosiervorrichtung (1) wird das zu verarbeitende Kunststoffgranulat in einen Extruder (2) eingeführt, in diesem aufgeschmolzen, homogenisiert und dem Blaskopf (3) zugeführt. Der Blaskopf weist eine Ringdüse auf, aus der die Kunststoffschmelze austritt. Durch den Blaskopf (3) erfolgt die Zuleitung von Kühlluft über die Zuluftleitung (4), die über ein Gebläse (5) mit Kühlluft versorgt wird. Die in der Schlauchblase (6) erwärmte Heißluft wird über die Abluftleitung (7) aus dem Inneren der Schlauchblase herausgeleitet.

Zur Einstellung der Luftmenge im Inneren der Schlauchblase (6) werden Gebläseregelungen eingesetzt, oder es befinden sich entweder in der Zuluftleitung (4) eine elektrisch verstellbare Klappe (8) oder in der Abluftleitung (7) eine elektrisch verstellbare Klappe (9). Die jeweilige Klappe (8,9) ist dann elektrisch mit der Anlagensteuerung (10) verbunden.

Die Anlagensteuerung (10) regelt den gesamten Folienblasvorgang, insbesondere den motorischen Antrieb (11) für den Extruder (2), die Zudosierung des Granulats aus der Dosiervorrichtung (1), den Hauptkühlluftring in der Nähe der Ringdüse des Blaskopfes (3), sowie die Abzugsgeschwindigkeit des Folienschlauches

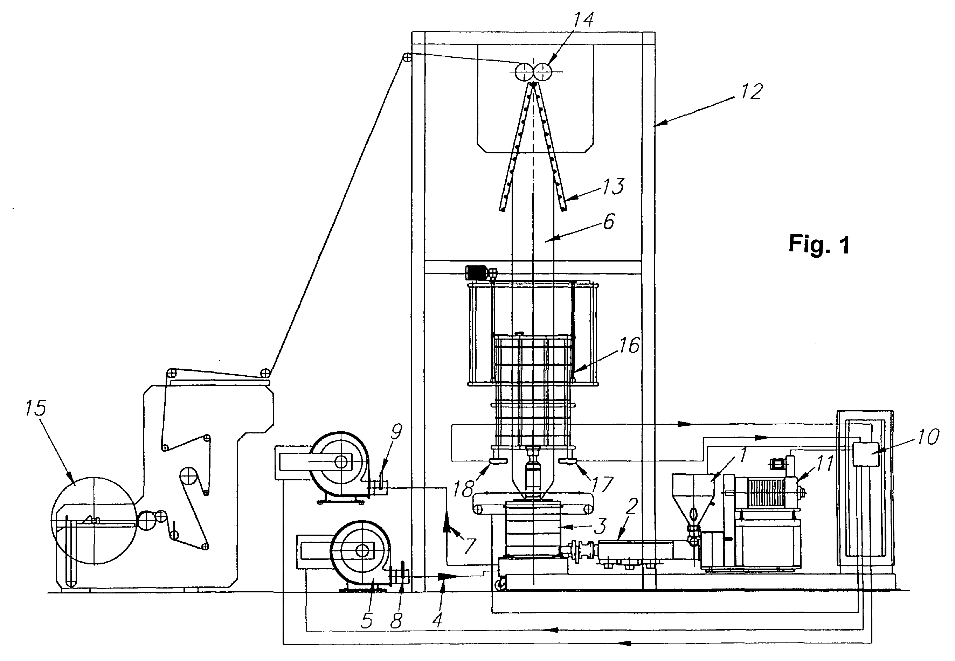

Das Gestell (12) der Folienblasanlage trägt die Flachlegung (13) und die Abzugsvorichtung (14) durch die die Schlauchblase (6) flachgelegt wird und zum Aufwickeln der Folie auf einen Folienwickel (15) weitergeleitet wird. Des weiteren ist am Gestell (12) ein Kalibrierkorb (16) angebracht, der dem gewünschtem Soll-Durchmesser der Schlauchblase (6) angepaßt werden kann (Fig. 1)

Die Anpassung erfolgt durch ein Öffnen und Schließen des Kalibrierkorbes (16), insbesondere aufgrund eines elektrischen Stellsignals von der Anlagensteuerung (10).

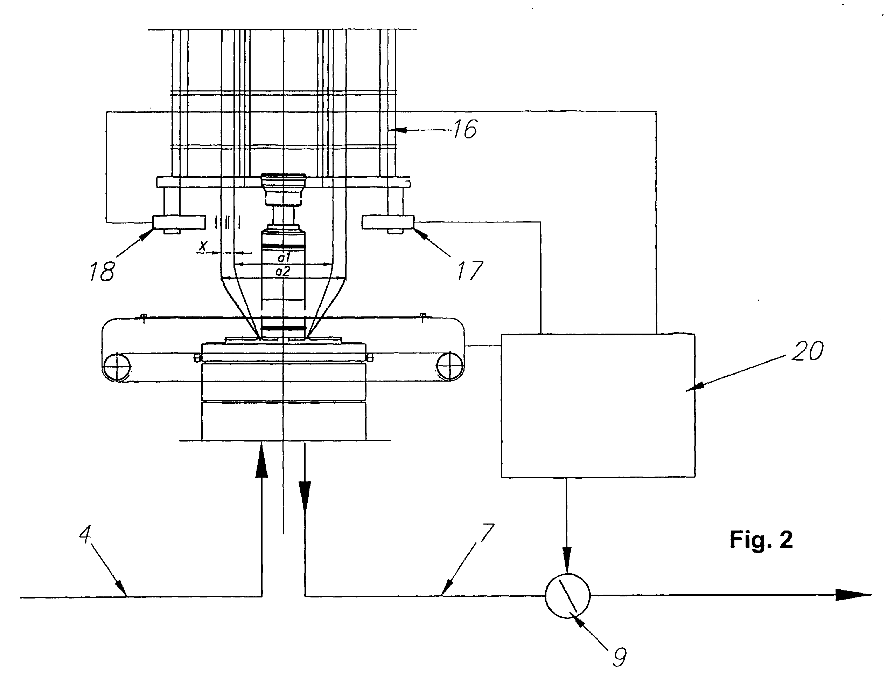

Erfindungsgemäß sind Ultraschallsensoren (17) unterhalb des Kalibrierkorbes (16) fest an dem Gestell (12) des Kalibrierkorbes (16) montiert. Neben den Ultraschallsensoren (17) ist ein weiterer Ultraschall-Sensor (18) vorgesehen. Dieser kann in gleicher Höhe wie die Ultraschallsensoren (17) oder in einer anderen Höhe am Kalibrierkorbes (16) angeordnet sein. Dieser zusätzliche Ultraschall-Sensor (18) ist auf die Oberfläche der Schlauchblase (6) ausgerichtet (Fig. 2).

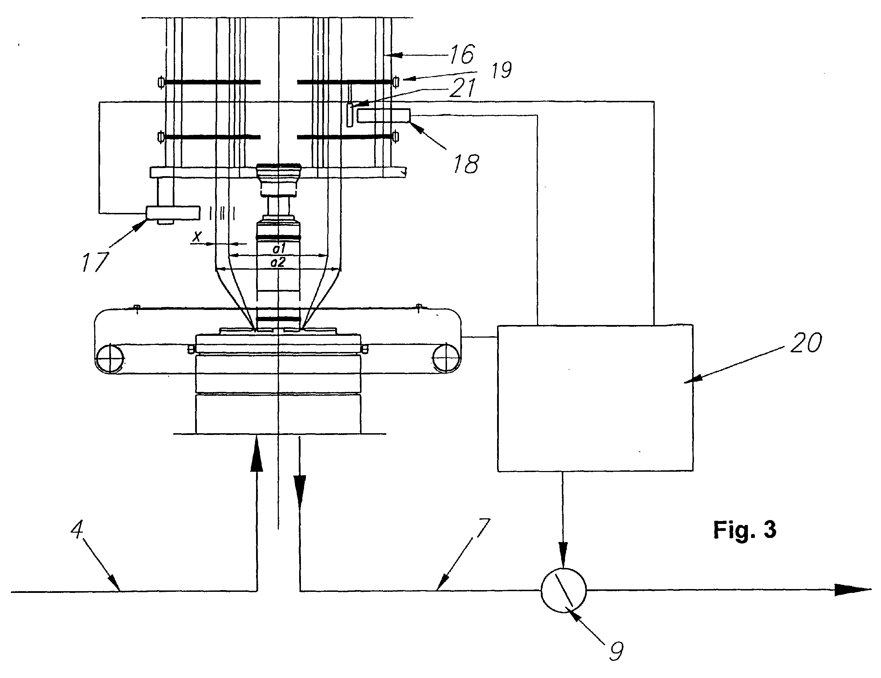

Bei Öffnen oder Schließen der Kalibrierkorb-Arme (19) ändert sich der Abstand zwischen dem Ultraschall-Sensor (18) und dem Reflektor (21). Die Abstandsänderung bewirkt eine Änderung der Eingangsgröße für die zugehörige Sensorsteuerung (20). Aufgrund dieser Änderung erfolgt die Verschiebung des Arbeitsfensters der Ultraschallsensoren (17) (Fig. 3)

Eine deratige Verschiebung des Arbeitsfensters ist in Fig. 2 und 3 schematisch dargestellt. Aufgrund der Durchmesserveränderung von a₁ auf a₂= a₁+2 x wird z.B. der Reflektor (21) oder die Oberfläche der Schlauchblase (6) zusammen mit den Kalibrierkorb-Armen (19) um die Strecke x verschoben. Der Ultraschall-Sensor (18) registriert die Abstandsänderung und gibt diese an die Steuerung (20) weiter, die dann eine Neueinstellung des Arbeitsfensters der Ultraschall-Sensoren (17) vornimmt.

Eine exakte Steuerung des Durchmessers der Schlauchblase (6) ist somit weiterhin über die vollständig betätigbaren Klappen (8,9) in den Zuluft- (8) und Abluftleitungen (9) in den engen Grenzen der Ultraschall-Sensoren (17) möglich.

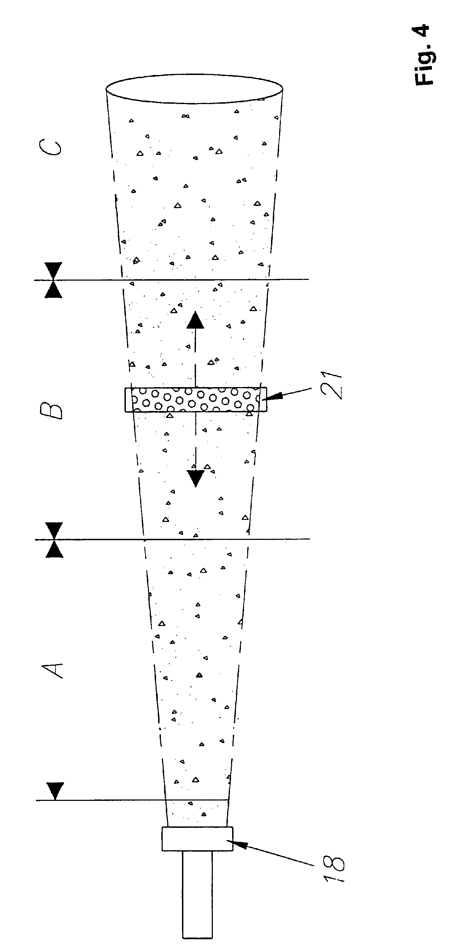

In Fig. 4 ist die Funktion des Arbeitsfensters eines Ultraschallsensors schematisch dargestellt. Im Bereich A und C ist der Schaltausgang des Sensors nicht gesetzt und es wird kein Signal am Sensorausgang ausgegeben. Nur im Bereich B, dem Fensterbereich ist der Schaltausgang gesetzt und es kann z.B. die Spannung ausgegeben werden. Je nach Position des Objektes (21), das die Schlauchfolie oder ein Reflektor darstellen kann, wird eine Spannung zwischen 0V und 10V erzeugt. Dadurch ist aus der Spannung am Sensor, ein eindeutiges Signal über die Position des Objektes (21) innerhalb des Fensterbereiches B entnehmbar.

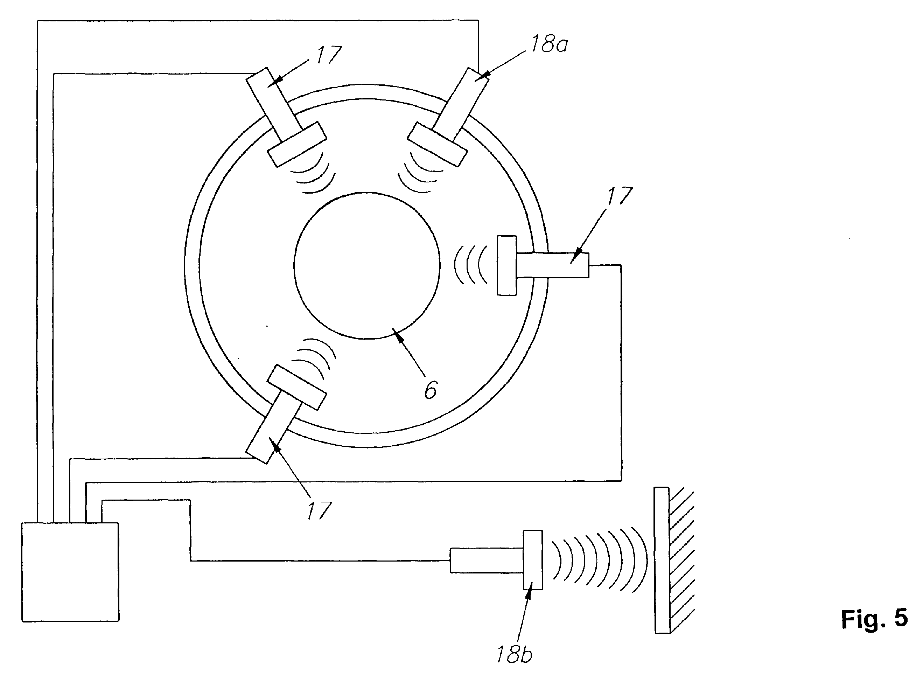

Fig. 5 zeigt eine Draufsicht auf die Ultraschallsensoren (17, 18a,b). Für die eigentliche Messung des Durchmessers der Schlauchfolie werden üblicherweise drei Sensoren (17) eingesetzt, diese liefern die besten Messergebnisse. Es kann jedoch auch nur ein einzelner Sensor (17) zur Messung herangezogen werden. Aufgrund einer exzentrischen Lage der Schlauchfolienblase kann es dabei jedoch zu Messungenaugigkeiten kommen. In jedem Fall können auch mehr als drei Sensoren (17) eingesetzt werden, falls dies erforderlich ist.

Neben dem erfindungsgemäßen weiteren Sensor (18a) kann ein zusätzlicher Sensor (18b) vorgesehen sein, der gegen einen festen Reflektor gerichtet ist und zur Kompensation der Temperaturschwankungen eingesetzt werden kann. Die Funktionen der Sensoren (18a und 18b) können in einem einzigen Sensor integriert sein.

## Patentansprüche

1. Verfahren zur Regelung des Durchmessers von Folienschläuchen während ihrer Herstellung in Folienblasanlagen, mit einer Steuereinheit (20), dessen Eingangsgröße von einem abstandsproportionalen Analogsignal mit einem oberen und einen unteren Grenzwert eines einstellbaren Arbeitsfensters aus mindestens einem ersten Ultraschallsensor (17) zum berührungslosen Messen des Ist-Durchmessers des Schlauchblase (6) gebildet wird und die als Ausgangsgröße ein Signal zur Steuerung der zu- und abgeführten Luftmenge im aufgeblasenen Folienschlauch liefert **dadurch gekennzeichnet, daß** mindestens eine zweite Eingangsgröße eines zweiten Sensors ein Signal über den Solldurchmesser liefert und in Abhängigkeit dieses Signals die Anpassung des Arbeitsfensters des ersten Ultraschallsensors (17) an den Solldurchmesser erfolgt.

2. Verfahren nach Anspruch 1, **dadurch gekennzeichnet, daß** die zweite Eingangsgröße von einem Ultraschall-Sensor (18) geliefert wird, der die geöffnete Durchmesserweite eines die Schlauchblase (6) umfassenden Kalibrierkorbes (16) erfasst.

3. Verfahren nach Anspruch 2, **dadurch gekennzeichnet, daß** ein bereits vorhandener Referenzsensor zur Temperaturkompensation der ersten Ultraschall-Sensoren (17) als zweiter Ultraschall-Sensor genutzt wird.

4. Verfahren nach Anspruch 1, **dadurch gekennzeichnet, daß** die zweite Eingangsgröße ein elektrisches Signal ist, **daß** direkt aus einer vorhandenen Anlagensteuerung (10) übernommen wird.

5. Verfahren nach Anspruch 1 bis 4, **dadurch gekennzeichnet, daß** der Durchmesser des Folienschlauches aufgrund des Verhältnisses von zu- und abgeführter Luftmenge dadurch eingestellt wird, in dem in den Luftleitungen (4,7) angeordnete, elektrisch verstellbare Klappen (8,9) gesteuert werden.

6. Verfahren nach Anspruch 1 bis 4, **dadurch gekennzeichnet, daß** der Durchmesser des Folienschlauches aufgrund des Verhältnisses von zu- und abgeführter Luftmenge dadurch eingestellt wird, in dem die Drehzahl der Motoren der LuftGebläse gesteuert werden.

7. Vorichtung zur Durchführung des Verfahrens nach Anspruch 1 bis 6, **dadurch gekennzeichnet, daß** die Sensoren (17,18) fest mit dem Gestell (12) der Folienblasanlage oder des Kalibrierkorbes (16) verbunden sind.

8. Vorichtung zur Durchführung des Verfahrens nach Anspruch 1 bis 6, **dadurch gekennzeichnet, daß** der zweite Sensor (18) fest mit den beweglichen Armen (19) des Kalibrierkorbes verbunden ist.
